# EUROPÄISCHE PATENTSCHRIFT

(11) **EP 0 559 059 B1**
(45) Veröffentlichungstag und Bekanntmachung des Hinweises auf die Patenterteilung: **14.08.1996**
(21) Anmeldenummer: 93102827.8
(22) Anmeldetag: 24.02.1993
(51) Int. Cl.: C01B 33/20

(54) **Templatarmes Clathrasil**
Low template clathrasile
Clathrasile pauvre en template

(30) Priorität: 02.03.1992 DE 4206579
(43) Veröffentlichungstag der Anmeldung: 08.09.1993
(73) Patentinhaber: MERCK PATENT GmbH, D-64271 Darmstadt (DE)
(72) Erfinder: Grebner, Michael, W-6500 Mainz (DE); Reich, Axel, W-6509 Schornsheim (DE); Reichert, Horst, W-6500 Mainz (DE); Schüth, Ferdi, Dr., W-6500 Mainz (DE); Unger, Klaus, Prof. Dr., W-6104 Seeheim-Jugenheim (DE)

(56) Entgegenhaltungen:
- DE-A- 2 935 123
- ZEOLITES, Band 12, 1992; GIES et al., Seiten 42-49

## Beschreibung

Die Erfindung betriftt ein templatarmes Clathrasil, ein Verfahren zu dessen Herstellung sowie die Verwendung dieses Materials als Adsorbens.

Clathrasile gehören zur Klasse der porösen Tektosilikate oder Porosile, welche nach H. Gies und B. Marler, Zeolites, 12 (1992), 42 durch die allgemeine Formel 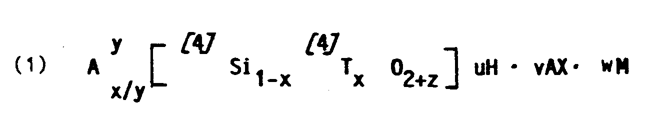
beschrieben werden können, worin A ein Kation mit der Ladung y, T ein trivalentes Kation, welches tetrahedral durch 4 O-Atome koordiniert ist, z die Anzahl zusäzlicher O-Atome zur Kompensation von Gitterunterbrechungen, AX Ionenpaare und M Gastpartikel sind und u, v und w 0, 1, 2, ... bedeuten. Als Kationen A kommen z.B. Alkali- oder Erdalkaliionen in Frage, T kann z.B. ein Aluminium- oder Borkation sein, und für X kommt eine Vielzahl von Anionen wie z.B. OH, Halogen etc. in Frage. Die Gastpartikel, welche auch als Template bezeichnet werden, werden in die Hohlräume der Porosilstruktur eingelagert und beeinflussen daher bei der Synthese der Porosile ganz wesentlich deren Struktur. Bei den Gastpartikeln handelt es sich i.a. um neutrale Moleküle, aber insbesondere bei geladenenen Porosilstrukturen können manchmal auch geladene Gastpartikel eingelagert werden. In diesem Fall muß die obige Formel (1) entsprechend modifiziert werden.

Nach der Größe und Form der Hohlräume werden Porosile in Clathrasile und Zeosile unterteilt. Während Zeosile käfig- oder kanalartige Poren aufweisen, die so groß sind, daß die Templatmoleküle unter relativ milden Bedingungen aus den Poren vertrieben und ggf. gegen andere Gastmoleküle ausgetauscht werden, weisen Clathrasile sehr kleine käfigartige Hohlräume auf, deren Öffnungen zu klein sind, als daß ein eingeschlossenes Molekül das Porensystem verlassen könnte. Clathrasile vom Typ Dodekasil 1 H, Dodekasil 3 C, Melanophlogit und Nonasil weisen Porenöffnungen von weniger als 3 Å auf und der Porendurchmesser beträgt typischerweise etwa 2.8 Å. Durch eine derartig enge Porenöffnung können keine Sauerstoffmoleküle in die Poren hinein- bzw. CO₂-Moleküle aus den Poren herausgelangen, sodaß die Poren auch durch einen Calcinierungsschritt nicht von den Templatmolekülen befreit werden können.

Die bisherige Herstellung der Clathrasile erfolgt durch hydrothermale Kristallisation bei z.B. 200 °C aus einer silikathaltigen Lösung, welcher Templatmoleküle wie z.B. Adamantylamin im überschuß zugesetzt werden, was zur Folge hat, daß in den Clathrasilkristallen praktisch jeder ausreichend große Hohlraum von einem Templatmolekül besetzt ist. Die Verwendung einer derartig hohen Templatkonzentration wurde bisher allgemein als erforderlich angesehen, um definierte und kristalline Clathrasilstrukturen mit guter Morphologie zu erhalten.

Nachteilig bei den bisher in der Literatur angegebenen Herstellungsverfahren sind die langen Synthesezeiten. Weiterhin entstehen bei den herkömmlichen Verfahren relativ große Kristalle mit einer Größe zwischen 150 und 500 µm, was für viele Anwendungen nicht erforderlich oder sogar unerwünscht ist. Besonders nach teilig aber ist, daß die nach herkömmlichen Verfahren hergestellten Clathrasile nur bedingt als poröse Materialien angesehen werden können, da praktisch alle zugänglichen und ausreichend großen Hohlräume bereits bei der Synthese mit Templatmolekülen belegt werden. Da die Templatmoleküle auch unter drastischen Bedingungen kaum aus den Hohlräumen entfernt werden können, können die bisher synthetisierten Clathrasile praktisch nicht als Absorbentien verwendet werden.

Der vorliegenden Erfindung lag die Aufgabe zugrunde, Clathrasile und ein Verfahren zu ihrer Herstellung bereit zu stellen, welche die Nachteile herkömmlicher Clathrasile und herkömmlicher Herstellungsverfahren nicht oder nur in geringerem Maße aufweisen.

Es wurde gefunden, daß diese Aufgabe durch die Bereitstellung des erfindungsgemäßen Verfahrens sowie der erfindungsgemäßen Clathrasile gelöst werden kann.

Gegenstand der Erfindung ist somit ein Verfahren zur Herstellung eines templatarmen Clathrasils, dadurch gekennzeichnet, daß ein alkalisch-wäßriges silikathaltiges Medium, enthaltend Kristallisationskeime und eine so geringe, ggf. teilweise oder vollständig in den Kristallisationskeimen enthaltene Templatmenge, daß der auf die SiO₂-Molzahl des Mediums bezogene Templatgehalt kleiner ist als 2%, getempert wird.

Gegenstand der Erfindung sind weiterhin templatarme Clathrasile, welche durch einen Templatgehalt von weniger als 1%, bezogen auf den SiO₂-Molgehalt des Clathrasils, gekennzeichnet sind.

Gegenstand der Erfindung ist weiterhin die Verwendung des erfindungsgemäßen Clathrasils als Absorbens für H₂, He und/oder NH₃.

Das erfindungsgemäße Verfahren eignet sich zur Herstellung verschiedener Clathrasile wie z.B. von Dodekasil 1 H, Dodekasil 3 C, Melanophlogit und Nonasil. Besonders gut geeignet ist das Verfahren zur Herstellung Von Dodekasil 1 H und Dodekasil 3 C und insbesondere von Dodekasil 1 H.
Es wurde gefunden, daß die Templatkonzentration bei der Clathrasilsynthese drastisch verringert werden kann, wenn dem alkalisch-wäßrigen silikathaltigen Medium Kristallisationskeime zugesetzt werden. Die Verwendung von Kristallisationskeimen zur Synthese von Zeolithen ist zwar bekannt (s. z.B. DE 29 35 123), jedoch ist die Synthese von Clathrasilen unter Zusatz von Kristallisationskeimen im Stand der Technik nicht beschrieben und es ist insbesondere bisher nicht erkannt worden, daß durch den Zusatz von Kristallisationskeimen neue templatarme und hochporöse Materialien erhalten werden können, welche sich insbesondere zur Verwendung als Absorbens eignen.

Als Kristallisationskeime werden kleingemahlene Clathrasilkristalle verwendet, welche z.B. nach herkömmlichen Herstellungsverfahren erhalten wurden und ggf. bereits Template enthalten. Das Mahlen der Clathrasilkristalle kann z.B. in einer Schwingmühle erfolgen, und die mittlere Partikelgröße der erhaltenen Kristallisationskeime beträgt typischerweise zwischen 0.2 und 1.5 µm und insbesondere etwa 1 µm.

Die zugesetzte Menge an Kristallisationskeimen ist weniger kritisch und kann zwischen 0.1 und 50 Gew%, bezogen auf den SiO₂-Gehalt des alkalisch-wäßrigen Mediums, betragen; bevorzugt ist ein Massenanteil zwischen 2 und 20 Gew.%.

Dabei wurde gefunden, daß durch die zugesetzte Impfkristall- oder Kristallisationskeimmenge die Größe der erhaltenenen Clathrasilkristalle beeinflußt werden kann. Während man mit relativ kleinen Impfkristallmengen etwa zwischen 5 und 10 Gew.% Clathrasilkristalle mit einer mittleren Teilchengröße zwischen 5 und 15 µm erhält, werden bei höheren Impfkristallkonzentrationen von mehr als 10 Gew.% und insbesondere zwischen 10 und 20 Gew.% kleinere Kristalle mit einer mittleren Teilchengröße von typischerweise weniger als 5 µm erhalten.

Die Impfung des alkalisch-wäßrigen silikathaltigen Mediums mit Kristallisationskaimen bewirkt offenbar, daß der Keimbildungsprozeß abgekürzt oder sogar übergangen wird, so daß kein die Keimbildung begünstigendes Milieu durch hohe Templatüberschüsse geschaffen werden muß. Der auf den SiO₂-Gehalt des alkalischwässrigen Mediums bezogene Templatgehalt ist kleiner als 2 Mol.% und insbesondere kleiner als 1 Mol.%; demgegenüber beträgt der Templatgehalt herkömmlicher Clathrasile i.a. mehr als 2.5 Mol.% und bei maximaler Käfigbesetzung 2.9 Mol.%. Besonders bevorzugt wird der Templatgehalt kleiner als 0.5 Mol.%, insbesondere nicht größer als 0.1 Mol.% und ganz besonders bevorzugt kleiner als 0.05 Mol.% gewählt. Dabei setzt sich der Templatgehalt zusammen aus dem ggf. in den Impfkristallen enthaltenem Templat sowie aus dem dem alkalisch-wäßrigen Medium zugesetzten Templat, wobei es unerheblich ist, wo das Templat anfangs lokalisiert ist. Die Morphologie der erhaltenen Clathrasil-Kristalle kann als gut bis sehr gut bezeichnet werden, und nur bei sehr niedrigen Templatkonzentrationen wird manchmal ein starkes Verwachsen der Kristalle beobachtet, was im Hinblick auf eine Verwendung dieses Materials als Absorbens jedoch unerheblich ist.

Als Template können verschiedene neutrale Moleküle verwendet werden wie z.B. quartäre Ammoniumverbindungen, Amine, Tenside wie z.B. Laurylsulfat oder Alkohole. Durch die Wahl der Impfkristalle und/oder die Wahl der Template wird die Kristallstruktur der nach dem Tempern erhaltenen Clathrasile festgelegt. Clathrasile der besonders bevorzugten Struktur Dodekasil 1 H werden insbesondere bei Verwendung von 1-Adamantylamin, Azabicyclononaniumiodid und/oder Piperidin als Templat erhalten.

Das alkalisch-wäßrige Medium weist typischerweise einen NH₃-Gehalt von 15 bis 45 Mol, der bei vollständiger Dissoziation der Base dem gleichen OH-Gehalt entspricht und einen H₂O-Gehalt von 40 bis 70 Mol, bezogen auf die SiO₂-Molzahl des Mediums auf. Zur Einstellung des erforderlichen OH-Gehaltes bzw. des entsprechenden pH-Wertes wird eine Base, üblicherweise NH₃ zugesetzt; der pH-Wert des alkalisch-wäßrigen Mediums beträgt vorzugsweise zwischen 12 und 13.

Die angegebenen Bereiche für OH-Gehalt, H₂O-Gehalt und pH sind i.a. bevorzugt, wobei allerdings auch Abweichungen von diesen Bereichen nach oben und nach unten möglich sind.

Als Silikatquelle kann insbesondere Kieselsäure verwendet werden, aber auch wäßrige Lösungen von Alkalisilkaten oder Alumosilikaten oder auch weitere Silikatquellen sind möglich.

Das vorstehend näher charakterisierte alkalisch-wäßrige silikathaltige Medium wird anschließend einer Temperbehandlung unterworfen, wodurch die Clathrasilkristalle erhalten werden. Die Aufheizgeschwindigkeit beträgt vorzugsweise zwischen 0.05 und 50 K/min und insbesondere zwischen 0.1 und 20 K/min, und die Endtemperatur wird vorzugsweise zwischen 400 und 470 K und insbesondere zwischen 423 und 453 K gewählt. Dabei kann die Temperatur sowohl mehr oder weniger linear hochgefahren werden, oder aber es können auch kompliziertere Temperaturprogramme, bei denen die Temperatur während des Aufheizens z.B. eine Zeitlang auf einem oder mehreren Zwischenwerten konstant gehalten wird, ehe sie dann weiter hochgefahren wird, oder auch weitere Temperaturprogramme benutzt werden.

Die Auswahl eines geeigneten Temperaturprogramms orientiert sich an der Vorstellung, daß sich die Clathrasil-Synthese grob in 2 Phasen unterteilen läßt, nämlich die Keimbildung als erste Phase und die Anlagerung von Monomeren an eine zum Wachstum befähigte Spezies als 2. Phase. So sind bei Verwendung einer kleinen oder relativ kleinen Impfkristallkonzentration häufig eine relativ niedrige Aufheizgeschwindigkeit und die Verwendung von Temperaturrampen bevorzugt, während bei höheren Impfkristall-Konzentrationen häufig schneller geheizt werden kann. Weiterhin werden bei niedrigen Aufheizgeschwindigkeiten vielfach Clathrasil-Kristalle von besonders perfekter Morphologie erhalten.

Die Anpassung von Aufheizgeschwindigkeit und Aufheizprogramm an die jeweils verwendete Zusammensetzung des alkalisch-wäßrigen silkathaltigen Mediums und die Optimierung im Hinblick auf die gewünschte Kristallmorphologie und Ausbeute kann der Fachmann leicht und ohne jedes erfinderisches Zutun durchführen. Die Gesamttemperdauer beträgt vorzugsweise zwischen 3 und 10 Tagen, wobei das Medium bei der Endtemperatur vorzugsweise Zwischen 3 und 10 Tagen gehalten wird.

Die vorliegende Erfindung soll etwas genauer am Beispiel von Dodekasil 1 H-Kristallen beschrieben werden. Im Dodekasil 1 H existieren zwei Arten von Hohlräumen mit einer Hohlraumöffnung von 0.28 nm, welche für kleine Moleküle wie H₂, He und/oder NH₃ zugänglich sind, nämlich Ikosaeder und Dodekaeder-Käfige. Daneben gibt es noch eine andere Art von Dodekaeder-Käfigen mit einer so kleinen, aus einem SiO-Fünfring bestehenden Hohlraumöffnung, daß diese Hohlräume praktisch für alle Moleküle unzugänglich sind. Diese nicht zugänglichen Dodekaeder-Käfige sollen im folgenden nicht weiter betrachtet werden.

Es sollen nun templatreiche und templatarme, d.h. erfindungsgemäße Dodekasil 1 H-Kristalle verglichen werden, wobei als Templat in beiden Fällen 1-Adamantylamin verwendet wird. In templatreichen Dodekasil 1 H-Kristallen sind die Ikosaeder-Käfige mehr oder weniger vollständig mit 1-Adamantylamin besetzt. Die zugänglichen Dodekaeder-Käfige sind leer und nicht mit 1-Adamantylaminmolekülen besetzt, die für diese Hohlräume zu groß sind. Da die Dodekaeder-Käfige jedoch nur über die besetzten Ikosaeder-Käfige zugänglich sind, stehen die zugänglichen Dodekaeder-Käfige -obwohl leer- nicht für eine Sorption zur Verfügung.

Im Unterschied dazu sind bei templatarmen Dodekasil 1 H-Kristallen viele Ikosaeder-Käfige unbesetzt. Hierdurch werden jedoch nicht nur die leeren Ikosaeder-Käfige, sondern zusätzlich auch noch das zugängliche Dodekaeder-Käfigsystem für die Sorption nutzbar gemacht. Durch diesen Effekt ist die drastische Erhöhung der Sorptionskapazität bei templatarmen Dodekasil 1 H-Kristallen im Vergleich zu templatreichen Dodekasil 1 H-Kristallen, wie sie etwa in Beispiel 1 gezeigt ist, zu erklären.

Die nach dem erfindungsgemäßen Verfahren erhaltenen Clathrasil-Kristalle zeichnen sich durch eine sehr gute Morphologie und durch einen geringen Templatgehalt aus, wobei letzterer in einer hohen Absorptionskapazität für kleine Atome oder Moleküle, insbesondere für H₂, NH₃ und/oder He, resultiert. Dabei sind solche erfindungsgemäßen Clathrasile besonders bevorzugt, welche eine Absorptionskapazität von mehr als 20 cm³ He/g Clathrasil (STP) bei einer Temperatur von 12 K und einem Heliumdruck von 0,5 bar aufweisen.

Aufgrund ihrer hohen Absorptionskapazität für kleine Moleküle und Atome sind die erfindungsgemäßen Clathrasile für verschiedene Anwendungen, etwa für die Abtrennung von He aus Erdgas oder von NH₃ aus Abgasen, besonders geeignet. Besonders bevorzugt ist die Verwendung der erfindungsgemäßen Clathrasile als Speichermedium für H₂, etwa für Traktionsanwendungen.

Die nachfolgend beschriebenen Beispiele sollen die Erfindung erläutern, ohne sie zu begrenzen.

### Beispiel 1

0.8 g pyrogene Kieselsäure der Zusammensetzung SiO₂ wurden mit 0.08 g kleingemahlenen Dodekasil 1 H-Kristallen, welche als Impfkristalle dienten und im folgenden als SiO₂(Impfkristalle) bezeichnet werden, und 23.4 ml 32 Gew.%-igem Ammoniak bei Raumtemperatur 0.5 min gerührt.

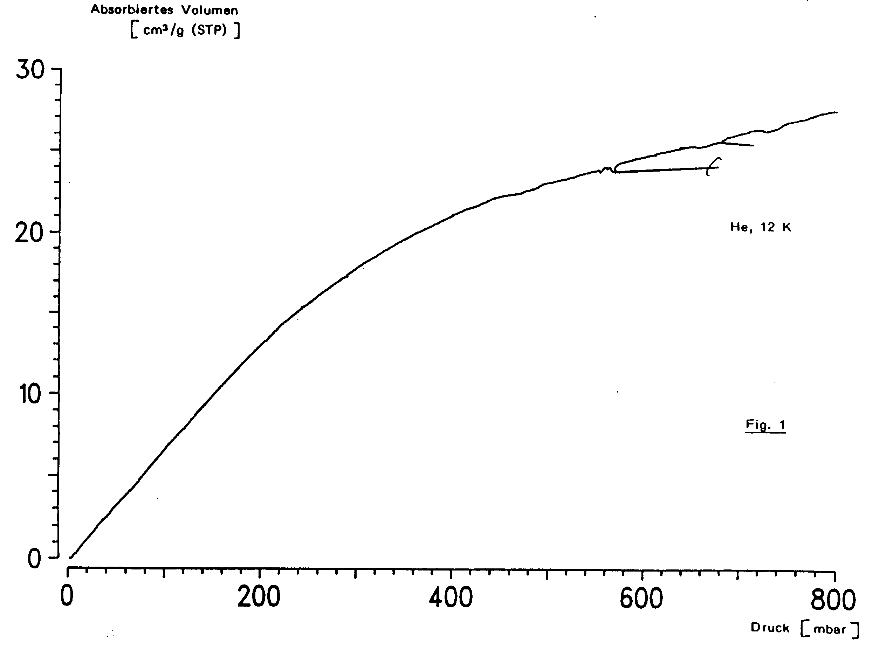

Der Reaktionsansatz hatte folgende molare Zusammensetzung:
1 SiO₂ : 0.1 SiO₂(Impfkristalle) : 0.0029 1-Adamantylamin (aus Impfkristallen) : 60 H₂O : 29 NH₃
Bei einer Heizrate von 0.5 K/min und einer Endtemperatur von 453 °K wurde nach 144 Stunden Dodekasil 1 H mit einer Ausbeute von 100 % erhalten. Das erhaltene Dodekasil 1 H weist eine Sorptionskapazität von 30 ml He/g Dodekasil (STP) bei einer Temperatur von 12 K auf. In Fig. 1 ist die Sorptionsisotherme bei 12 K für dieses Material gezeigt.

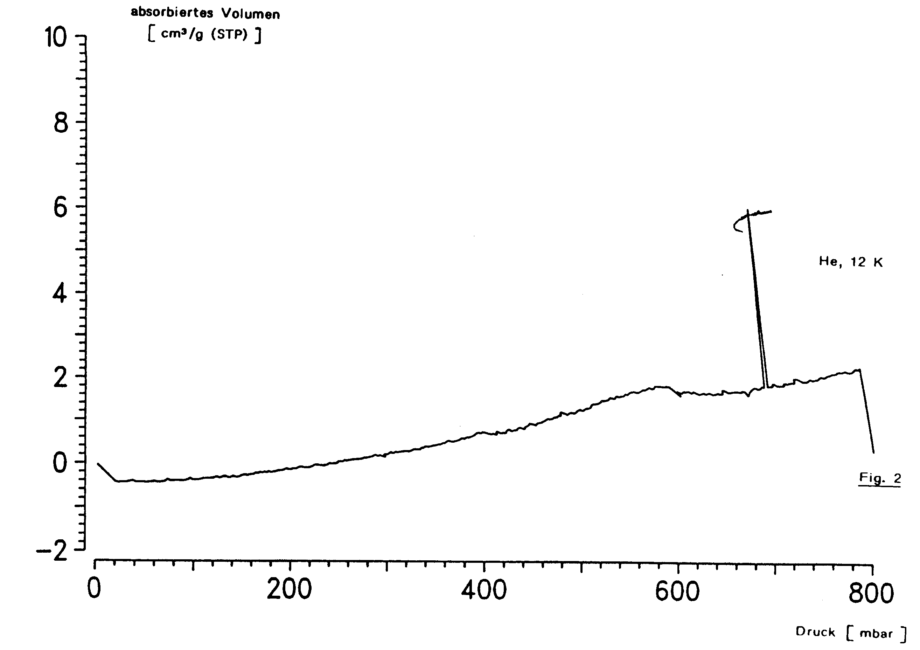

Zum Vergleich wurde ein templatreiches Dodekasil 1 H hergestellt. Dazu wurden 0.8 g pyrogene Kieselsäure der Zusammensetzung SiO₂ mit 0.08 g kleingemahlenen Dodekasil 1 H-Kristallen, welche als Impfkristalle dienten und im folgenden als SiO₂(Impfkristalle) bezeichnet werden, und 23.4 ml 32 Gew.%-igem Ammoniak bei Raumtemperatur 0.5 min gerührt. Der Reaktionsansatz hatte folgende Zusammensetzung:
1 SiO₂ : 0.1 SiO₂(Impfkristalle) : 0.73 1-Adamantylamin (aus Impfkristallen) : 60 H₂O : 29 NH₃
Bei einer Heizrate von 0.5 K/min und einer Endtemperatur von 453 °C wurde nach 144 Stunden Dodekasil 1 H mit einer Ausbeute von 100% erhalten. Das erhaltene Dodekasil 1 H weist eine Sorptionskapazität von 2 ml He/g bei einer Temperatur von 12 K auf. In Fig. 2 ist die Sorptionsisotherme bei 12 K für dieses Material gezeigt.

### Beispiel 2

0.8 g pyrogene Kieselsäure der Zusammensetzung SiO₂ wurden mit 0.08 g kleingemahlenen Dodekasil 1 H-Kristallen, welche als Impfkristalle dienten und im folgenden als SiO₂(Impfkristalle) bezeichnet werden, 0.01 g 1-Adamantylamin und 23.4 ml 25 Gew.%-igem Ammoniak bei Raumtemperatur 0.5 min gerührt.

Der Reaktionsansatz hatte folgende molare Zusammensetzung:
1 SiO₂ : 0.1 SiO₂(Impfkristalle) : 0.0079 1-Adamantylamin (aus Zusatz und Impfkristallen) : 60 H₂O : 22 NH₃
Bei einer Heizrate Von 0.5 K/min und einer Endtemperatur von 453 °K wurde nach 240 Stunden Dodekasil 1 H mit einer Ausbeute von 100% erhalten.

### Beispiel 3

0.8 g pyrogene Kieselsäure der Zusammensetzung SiO₂ wurden mit 0.08 g kleingemahlenen Dodekasil 1 H-Kristallen, welche als Impfkristalle dienten und im folgenden als SiO₂(Impfkristalle) bezeichnet werden, 0.01 g 1-Adamantylamin und 23.4 ml 47 Gew.%-igem Ammoniak bei Raumtemperatur 0.5 min gerührt.

Der Reaktionsansatz hatte folgende molare Zusammensetzung:
1 SiO₂ : 0.1 SiO₂(Impfkristalle) : 0.0079 1-Adamantylamin (aus Zusatz und Impfkristallen) : 48 H₂O : 37 NH₃
Bei einer Heizrate von 0.5 K/min und einer Endtemperatur von 453 °K wurde nach 240 Stunden Dodekasil 1 H mit einer Ausbeute von 100 % erhalten.

## Patentansprüche

1. Verfahren zur Herstellung eines templatarmen Clathrasils, dadurch gekenzeichnet, daß ein alkalisch-wäßriges silikathaltiges Medium, enthaltend Kristallisationskeime und eine so geringe, ggf. teilweise oder vollständig in den Kristallisationskeimen enthaltene Templatmenge enthält, daß der auf die Siₒ2-Molzahl des Mediums bezogene Templatgehalt des Clathrasils kleiner ist als 2 Mol%, getempert wird.

2. Verfahren nach Anspruch 1, dadurch gekennzeichnet, daß als Kristallisationskeime klein gemahlene Kristalle des Clathrasils benutzt werden.

3. Verfahren nach Anspruch 1 oder 2, dadurch gekennzeichnet, daß der Massenanteil der Kristallisationskeime, bezogen auf die Masse der Kieselsäure zwischen 0.05 und 0.2 beträgt.

4. Verfahren nach einem der Ansprüche 1-3, dadurch gekennzeichnet, daß als Template 1-Adamantylamin, Azabicyclononaniumiodid und/oder Piperidin verwendet werden.

5. Verfahren nach einem der Ansprüche 1-4, dadurch gekennzeichnet, daß das Medium einen NH₃-Gehalt von 15 bis 45 Mol und einen H₂O-Gehalt von 40 bis 70 Mol, jeweils bezogen auf die SiO₂-Molzahl aufweist.

6. Verfahren nach einem der Ansprüche 1-5, dadurch gekennzeichnet, daß das Medium mit einer im wesentlichen linearen Heizgeschwindigkeit bis auf eine Endtemperatur aufgeheizt wird, wobei die Heizrate zwischen 0.1 und 20 K/min und die Endtemperatur zwischen 400 und 480 K betragen.

7. Templatarmes Clathrasil erhältlich nach einem Verfahren gemäß einem der Ansprüche 1-6, gekennzeichnet durch ein Absorptionsvermögen für He von mindestens 20 g He/cm³ Clathrasil bei einer Temperatur von 12 K und einem He-Druck von 0.5 bar.

8. Verwendung des Clathrasils nach einem der Ansprüche 1-7 als Adsorbens für H₂, He und/oder NH₃.

## Claims

1. Process for the preparation of a low-template clathrasil, characterised in that an alkaline aqueous silicate-containing medium comprising crystallisation seeds and such a small amount of template, some of which or all of which may be present in the crystallisation seeds, that the template content of the clathrasil, relative to the number of moles of the SiO₂ of the medium, is less than 2 mol%, is heat-treated.

2. Process according to Claim 1, characterised in that the crystallisation seeds used are finely milled clathrasil crystals.

3. Process according to Claim 1 or 2, characterised in that the weight percentage of the crystallisation seeds, relative to the weight of silica, is between 0.05 and 0.2.

4. Process according to one of Claims 1-3, characterised in that the templates used are 1-adamantylamine, azabicyclononanium iodide and/or piperidine.

5. Process according to one of Claims 1-4, characterised in that the medium has an NH₃ content of 15 to 45 mol and an H₂O content of 40 to 70 mol, each relative to the number Of moles of SiO₂.

6. Process according to one of Claims 1-5, characterised in that the medium is heated at a substantially linear heating rate to a final temperature, in which the heating rate is between 0.1 and 20 K/min and the final temperature is between 400 and 480 K.

7. Low-template clathrasil obtainable by a process according to one of Claims 1-6, characterised by an absorption capacity for He of at least 20 g of He/cm³ of clathrasil at a temperature of 12 K and an He pressure of 0.5 bar.

8. Use of the clathrasil according to one of Claims 1-7 as adsorbent for H₂, He and/or NH₃.

## Revendications

1. Procédé pour la préparation d'un clathrasil pauvre en templat, caractérisé en ce que l'on recuit un milieu aqueux alcalin contenant des silicates, des germes de cristallisation et une quantité de templat éventuellement contenue en partie ou en totalité dans les germes de cristallisation, telle que la teneur en templat du clathrasil, rapportée au nombre de moles de SiO₂ du milieu, soit inférieure à 2 % en mole.

2. Procédé selon la revendication 1, caractérisé en ce que l'on utilise, comme fermes de cristallisation, des cristaux finement broyés du clathrasil.

3. Procédé selon la revendication 1 ou 2, caractérisé en ce que la proportion pondérale de germes de cristallisation, rapportée au poids de l'acide silicique, est comprise entre 0,05 et 0,2 %.

4. Procédé selon l'une des revendications 1 à 3, caractérisé en ce que l'on utilise, comme templat, la l-adamantylamine, l'iodure d'azabicyclononanium et/ou la pipéridine.

5. Procédé selon l'une des revendications 1 à 4, caractérisé en ce que le milieu présente une teneur en NH₃ allant de 15 à 45 moles et une teneur en H₂O allant de 40 à 70 moles, rapportée au nombre de moles de SiO₂.

6. Procédé selon l'une des revendications 1 à 5, caractérisé en ce que l'on échauffe le milieu jusqu'à la température finale avec une vitesse de chauffage essentiellement linéaire, la vitesse de chauffage étant comprise entre 0,1 et 20 K/min et la température finale étant comprise entre 400 et 480 K.

7. Clathrasil pauvre en templat obtenu par un procédé selon l'une des revendications 1 à 6, caractérisé par un pouvoir d'absorption vis-à-vis de l'hélium (He) d'au moins 20 g He par cm³ de clathrasil à une température de 12 K et sous une pression d'hélium de 0,5 bar.

8. Utilisation du clathrasil selon l'une des revendications 1 à 7 comme adsorbant de H₂, He et/ou NH₃.
